Europäisches Patentamt

European Patent Office

Office européen des brevets

(19)

(11) Veröffentlichungsnummer: **0 244 624 B1**

# EUROPÄISCHE PATENTSCHRIFT

(12)

(45) Veröffentlichungstag der Patentschrift: **11.12.91**

(51) Int. Cl.⁵: **H02G 7/12**

(21) Anmeldenummer: **87104559.7**

(22) Anmeldetag: **27.03.87**

(54) **Selbstdämpfender Feldabstandhalter für Bündelleiter.**

(30) Priorität: **02.04.86 DE 3610885**

(43) Veröffentlichungstag der Anmeldung:
**11.11.87 Patentblatt 87/46**

(45) Bekanntmachung des Hinweises auf die
Patenterteilung:
**11.12.91 Patentblatt 91/50**

(84) Benannte Vertragsstaaten:
**AT CH DE ES GB IT LI**

(56) Entgegenhaltungen:
**AU-B- 462 743**     **DE-A- 2 742 843**
**FR-A- 1 440 938**   **GB-A- 965 366**
**GB-A- 2 023 943**   **GB-A- 2 121 243**
**US-A- 3 979 553**

(73) Patentinhaber: **RICHARD BERGNER GMBH & CO**
**Bahnhofstrasse 8-16**
**W-8540 Schwabach(DE)**

(72) Erfinder: **Möcks, Lotar**
**Am Hohen Hof 17**
**W-8540 Rednitzhembach(DE)**
Erfinder: **Nuhn, Klaus**
**Kettelerstr. 11**
**W-8540 Schwabach(DE)**

(74) Vertreter: **Tergau, Enno et al**
**Patentanwälte Tergau & Pohl Postfach 11 93**
**47 Hefnersplatz 3**
**W-8500 Nürnberg 11(DE)**

## Beschreibung

Die Erfindung geht aus von einem selbstdämpfenden Feldabstandhalter für Bündelleiter entsprechend dem Oberbegriff des Patentanspruches 1.

Aus der DE-OS 2 234 721 ist ein solcher selbstdämpfender Feldabstandhalter für Bündelleiter von Freileitungen bekannt, der im wesentlichen aus einem zentralen steifen Rahmen besteht, an dem entsprechend der Anzahl der Leiter elastische Gelenke die Verbindung zu Hebeln darstellen, die wiederum in Klemmen für die Leiter-Seile enden. Durch die Ausbildung der Gelenke soll die Auswirkung sowohl von Schwingungen sehr hoher Frequenzen und kleiner Amplituden als auch von galoppierenden Schwingungen, also niederfrequenter, langwelliger Schwingungen, gedämpft werden. Die elastischen Gelenke sollen Relativ-Bewegungen der Klemm-Punkte nach jeder Richtung und mit geeigneten Amplituden gestatten. Hierzu läuft der Rahmen bei jedem Gelenk in eine Art Gabel aus, zwischen deren Innenflächen ein Quadrat-Stab drehsteif befestigt ist. Zwischen die seitlichen Begrenzungsflächen des Quadrat-Stabes und den Gegenflächen mit parabelförmigem Querschnitt in einer Öffnung am inneren Ende des Hebels sind unter Vorspannung Wälzkörper aus einem elastischen Material eingelegt. Vor dem Einlegen haben die einzelnen Wälzkörper angenähert die Formgestalt eines Zylinders. Bei Bewegungen des Hebels verformen sich die Körper während des Wälzens entsprechend den örtlich unterschiedlichen verbleibenden freien Räumen. Es wird in der Druckschrift ausdrücklich erwähnt, daß bei den Bewegungen die natürliche elastische Hysterese der Wälzkörper durch Reibung erhöht wird. Die freie Bewegbarkeit des Gelenkes ist in Richtung der Längsachse des Quadrat-Stabes ebenso wie eine Kreisbewegung um diese Achse durch Anschlagmittel begrenzt. Nach heutigen Erkenntnissen ist außer Abnutzung und vorzeitiger Alterung des elastischen Materials auch Spaltkorrosion an den angrenzenden Abwälzflächen zu erwarten. Die gleichförmige elastische Dämpfung der zulässigen Bewegungen erscheint nicht gesichert. Der Gesamtaufbau des Abstandhalters trägt der Dynamik der Seilbewegungen noch nicht Rechnung.

Aus der GB-PS 1 076 421 ist ein Feldabstandhalter für Bündel aus mindestens drei Leitern bekannt, wobei jeder Leiter von einer Klemme gehalten und über ein zugeordnetes elastisches Gelenk mit einem Mittelteil verbunden ist. Der Abstandhalter soll primär eine gegenseitige Verschiebung der einzelnen Leiter in Richtung von deren Längserstreckung erlauben. Quer hierzu gerichtete Bewegungen sollen nur sehr begrenzt möglich sein. Es erfolgt also eine ungleiche Dämpfung in den unterschiedlichen Beanspruchungsrichtungen. Das einzelne Gelenk weist eine längliche, nur in Richtung von zwei Achsen gekrümmte Buchse sowie einen ebenfalls länglichen, nur in Richtung von zwei einander parallelen Achsen, analog wie bei der Buchse, jedoch mit kleineren Radien gekrümmten Bolzen auf. Die Buchse ist hier dem Mittelteil und der Bolzen dem Distanzstab der Klemme zugehörig. Der Zwischenraum zwischen Buchse und Bolzen ist mit einem elastischen Material, genannt wird Elastomer, ausgefüllt. Mit der Oberfläche des Bolzens ist das elastische Material durch Klebung verbunden. Nach einem anderen Beispiel kann das elastische Gelenk sich auch in der Nähe der Klemme befinden. Zwischen dem Gelenk und dem Mittelteil erstreckt sich dann ein Distanzstab. Bei jedem dieser Beispiele erfolgt eine ungleiche elastische Dämpfung in den unterschiedlichen Beanspruchungsrichtungen. Der Schnittpunkt der Achsen der einzelnen Distanzstäbe ist punktgleich mit dem geometrischen Mittelpunkt des Leiterbündels.

Der aus der DE-PS 1 285 033 bekannte Feldabstandhalter für Bündelleiter soll unter elastischer Spannung alle Relativbewegungen der die Einzelleiter haltenden Klemmen zulassen, die zur Anpassung der relativen Verschiebungen der Leiter seitlich und in Längsrichtung, etwa als Folge von Veränderungen im Betrieb oder durch Nachspannen der Einzelleiter auftreten können. Es sind also Bewegungen in Längsrichtung der Leiter eindeutig bevorzugt. Demgemäß hat der Abstandhalter ein aus zwei parallelen Scheiben gebildetes, etwa oktogonales Mittelstück und eine der Anzahl der Leiter entsprechende Zahl von radial vom Mittelstück wegweisenden starren Distanzstäben, die über je ein elastisches Gelenk mit dem Mittelstück verbunden sind und endseitig Klemmen für die Leiterseile tragen. Entsprechend der Anzahl der Leiterseile sind in Randnähe des Mittelstückes symmetrisch zur Trennebene der Scheiben liegende Hohlräume angeordnet, die vorzugsweise eine doppel-kreiskegelige Querschnittsform haben. In jede Ausnehmung ragt das Ende eines Distanzstabes mit einer Verdickung, die eine ähnliche Formgestalt wie der Hohlraum, jedoch mit kleineren Abmessungen hat. Jede Verdickung in jedem Hohlraum ist zumindest teilweise von einem elastischen Material umgeben. Wegen der Teilbarkeit des Mittelstückes kann das elastische Material bestenfalls mit einer der gegeneinander beweglichen Teile fest verbunden sein. Ferner sind Maßnahmen zur Ausschlagbegrenzung des Distanzstabes vorgesehen. Die Teilung des Mittelstückes gestattet es ferner, das elastische Material mit etwas Vorspannung einzubauen. In der Druckschrift ist ausdrücklich angegeben, daß keine gleichmäßige Dämpfung der Torsionsbewegungen erfolgt. Maßnahmen, die den aus unterschiedlichen Seilspannungen resultierenden differenzierten Schwingungsverhalten Rechnung tragen, sind nicht angegeben.

Sphärische Gelenke hat der aus der DE-OS 26 18 778 bekannte Abstandhalter. Der Halter weist ein aus zwei symmetrischen Hälften und aus Teil-Distanzstäben gebildetes Mittelteil auf, das an den Gelenkpunkten zu den einzelnen Leitern hin in mit einer Nut versehene Kugelhalbschalen ausläuft. In diese Halbschalen werden bei der Montage die ebenfalls mit einer Nut versehenen kugeligen Gelenkköpfe eingelegt, die das innere Ende je eines zum betreffenden Leiter sich hin erstreckenden Hebels bilden, der seinerseits in einen Gabelkopf für den Leiter endet. Der Leiter ist im Kopf durch vorgeformte Spiralen gehalten. Das Kugelgelenk erhält seine Beweglichkeit durch einen vor der Montage über den Kugelkopf übergestülpten, verhältnismäßig dünnen Überzug aus einem elastischen Material; der Überzug trägt wegen der beabsichtigten Formschlußverbindung durch die vorerwähnten Nuten entsprechende Wülste. Die mit dem elastischen Überzug versehenen Kugelköpfe werden bei der Montage in die entsprechenden Kugelhalbschalen eingelegt; anschließend werden die beiden aufeinandergelegten Mittelteilhälften durch eine Anzahl von Schrauben miteinander verbunden. Das Gelenk ist nach heutigen Erkenntnissen zu steif, weil die Scherkräfte auf nur eine verhältnismäßig dünne elastische Schicht wirken. Spaltkorrosion aufgrund der lediglich vorhandenen Formschlußverbindung zwischen Überzug und Kugelkopf ist zu erwarten. Das Bewegungszentrum des Gelenksystems ist punktgleich mit dem geometrischen Mittelpunkt des Leiterbündels.

Den zahlreichen Ausführungsbeispielen eines schwingungsdämpfenden Abstandhalters gemäß der DE-OS 25 34 020 ist gemeinsam, daß in den verschiedenen Bewegungsrichtungen eine sehr unterschiedliche Dämpfung erfolgt. Das Wirkungszentrum des Dämpfungssystemes ist punktgleich mit dem geometrischen Mittelpunkt des Leiter-Bündels.

Punktdeckung von Wirkungszentrum und geometrischen Mittelpunkt des Leiter-Bündels ist ferner beim Feldabstandhalter gemäß der DE-OS 27 56 341 vorhanden. Dieser Feldabstandhalter besteht aus einem Mittelteil, von dem aus über je ein etwa sphärisches Gelenk verbundene Distanzstäbe sich zu den einzelnen Seilklemmen hin erstrecken. Zwischen Seilklemme und Distanzstab ist je ein weiteres etwa sphärisches Gelenk eingefügt. Der konstruktive Aufbau der Teile dieses Abstandhalters erlaubt nur eine formschlüssige Verbindung zwischen Gelenkkopf und elastischem Material einerseits sowie zwischen diesem und der zugeordneten Gelenkschale andererseits. Nach neueren Erkenntnissen ist das Auftreten von Spaltkorrosion und außerdem von vorzeitiger Zerstörung des elastischen Materials zu befürchten.

Aus der GB-PS 788 076 ist ein Feldabstandhalter für Zweierbündel bekannt, der aus einem geraden Distanzstab besteht, zwischen welchem und den ein Leiterseil haltenden Klemmen je ein sphärisches Lager angeordnet ist. Die allseitige Beweglichkeit dieses Lagers ist u.a. durch eine zwischen die gegenseitig beweglichen Gelenkteile eingepreßte dünne Schicht aus einem elastischen Material erhalten. Dieses Gelenk soll verschleißfrei und selbstrückstellend sein, sowie Seilschwingungen niedriger Amplitude dämpfen. Hierzu läuft der Distanzstab in eine Gabel aus, in der mittels eines Schrauben-Bolzens ein kugelförmiges inneres Gelenkteil gehaltert ist. Dieses ist von einer dünnen Schicht aus Gummi umhüllt. Der Gummi steht unter der Druckeinwirkung von drei Segmenten, die gegenseitig etwas beabstandet in der Bohrung einer an der zugehörigen Klemmenhälfte angebrachten Öse sind. Dieses Gelenk gibt dem Seil nicht die in allen drei Richtungen erwünschten gleichen, jedoch gedämpften Bewegungsfreiheiten. An den Grenzschichten zwischen dem elastischen Material und den angepreßten Metallflächen ist bei der angedeuteten Möglichkeit der Klebung Spaltkorrosion zu erwarten. Es wurde in der Druckschrift ferner die Möglichkeit der Anwendung der bekannten Konstruktion bei Abstandhaltern für mehr als zwei Leiter angedeutet, jedoch kein Hinweis gegeben, wie der dabei gegebenen besonderen Seildynamik Rechnung getragen werden soll.

In ähnlicher Weise wird ohne Angabe von Einzelheiten von dem dämpfenden Abstandhalter für Zweierbündel gemäß der EP 01 04 514 A2 (83 108 813.3) behauptet, er sei durch Zufügen einer entsprechenden Anzahl von Hebeln auf mehr als Zweierbündel erweiterbar. Bekannt ist aus dieser Druckschrift lediglich ein dämpfender Abstandhalter für Zweierbündel, bei dem zwischen den die beiden Leiterseile haltenden Klemmen je ein kurzer Arm zu je einem Gelenk führt. Zwischen den beiden Gelenken erstreckt sich ein leichtes Distanzteil mit I-Querschnitt, das von der Seite gesehen annähernd die Formgestalt eines U hat, dessen Schenkel nach außen geneigt sind. Die Schenkel laufen in rechteckförmige Rahmen zur Aufnahme des Gelenkes aus. Nach dem bevorzugten Beispiel besteht das eigentliche Gelenk aus einem Paar Platten und einem Kern. Zwischen Platten und Kern ist beidseitig jeweils ein Paar Elastikkörper mit der Formgestalt von angenähert konkaven Zylindern eingeklebt. Die beiden Platten sind unter Vorspannung in den Rahmen am Distanzteil eingefügt. Den Kern verbinden zwei Bolzen mit dem gabelförmigen Ende des zugehörigen Klemmen-Armes. Eine Weiterbildung des eigentlichen Gelenkes und des Abstandhalters selbst in Richtung gleichmäßiger elastischer Dämpfung in den drei maßgebenden Richtungen unter Beachtung der Seildynamik erscheint angebracht.

Der aus der DE-OS 2 326 200 bekannte Abstandhalter soll ohne Gefahr von mechanischer Überbeanspruchung sowohl in Längsrichtung der Leiter als auch orthogonal dazu auftretende, durch Sturmböen verursachte Schwingungen absorbieren. Dieser Abstandhalter besteht aus einem Zentralkörper mit den Leitern zugeordneten Tragarmen und endseitig über Gabelelemente angelenkten Halterungen für die Leiter. Die Halterungen sind an den Tragarmen über Gelenkarm und Gabelgelenk angeschlossen. Die Gabelgelenke bestehen aus in den Gabelschenkeln angeordneten unrunden Ausnehmungen zur Aufnahme entsprechend unrunder Gelenkbolzen bzw. Gelenkhülsen sowie aus zwischen diesen und den Gabelschenkeln eingefügten Dämpfungselementen aus einem elastischen Material. Dieses kann nur durch Formschluß mit den benachbarten metallischen Gelenkteilen verbunden sein. Spaltkorrosion ist daher zu befürchten; die Dämpfungswirkung in den drei Bewegungsrichtungen ist ungleich. Dem unterschiedlichen Schwingungsverhalten von in ungleichen Höhen gespannten Leiterseilen ist nicht Rechnung getragen.

Die gleichen Vorbehalte gelten auch für den aus der DE-OS 22 32 587 bekannten Kabeldämpfer.

Unter Spaltkorrosion, die bei bekannten Feldabstandhaltern als ebenfalls zu beseitigender Nachteil erwähnt wurde, versteht man die Korrosion in Kapillar-Ritzen oder -Spalten, die durch die eindringende Feuchtigkeit ausgelöst wird. Dies tritt insbesondere bei der Kombination Elastomer zu Aluminium-Legierungen auf. Fälle dieser Art sind aus der Praxis bekannt. Die Korrosion kann so weit gehen, daß die Funktion der mit Spaltkorrosion behafteten Teile in Frage gestellt wird.

Aus FR-A-14 40 938 ist ein selbstdämpfender Feldabstandhalter für Bündelleiter von Freileitungen bekannt, bei dem sich zu den Leiter-Seilen hin erstreckende, in Halteteilen endende Hebel einen Rahmen bilden. An den Rahmeneckpunkten sind die einzelnen Hebel jeweils untereinander über ein elastisches Gelenk verbunden, wodurch sich auch hier gewisse Dämpfungseigenschaften des Feldabstandhalters ergeben. Die beiden einen Rahmeneckpunkt bildenden Hebel bilden ein Mittelstück bzw. ein äußeres Gehäuse. Zwischen diesen Teilen ist unter Vorspannung ein elastisches und dämpfend wirkendes Material angeordnet. Dieses kann mit den angrenzenden Flächen sowohl des Mittelstückes als auch des äußeren Gehäuses verklebt sein.

Der dem Erfindungsgegenstand nächstkommende Stand der Technik ist in US-A-39 79 553 gezeigt. Es weist die im Oberbegriff des Anspruches 1 angegebenen Merkmale auf, auf die hiermit Bezug genommen wird.

Die allseits beweglichen sphärischen Gelenke dämpfen etwa gleichmäßig die Bewegungen in den drei zulässigen Bewegungsrichtungen. Dies betrifft Bewegungen der Leiter in Richtung von deren Längserstreckung, ferner Seilschwingungen in lotrechter und in horizontaler Richtung. Bei Bewegungen in Längsrichtung wird das elastische Material auf Biegung, bei den anderen Schwingungsformen auf Torsion beansprucht; das Gelenk wird in sich verdreht. Beim Auftreten von Kurzschlußströmen im Leiterseilbündel hingegen ist das elastische Material vorzugsweise auf Druck beansprucht.

Der selbstdämpfende Feldabstandhalter gemäß US-A-39 79 553 erfüllt somit zwei zunächst konträre Grundforderungen, nämlich

a) ein einwandfreies Abstandhalten der zu einem Bündel gehörenden Leiter; hierfür muß der Halter wegen des Kurzschlußfalles möglichst starr sein; und

b) eine bereits bei geringfügigen Auslenkungen der Klemmen sensibel erfolgende Schwingungsdämpfung.

Zur Lösung dieser konträren Grundforderungen sind die bekannten Abstandhalter in allen wesentlichen Teilbereichen weitergebildet worden.

Durch den im Anspruch 1 u.a. angegebenen Stoffschluß ist die Spaltkorrosion, die bisher bei Gelenken mit formschlüssiger Verbindung oder Verbindung durch Klebung zu beobachten war, völlig vermieden.

Durch den Höhenversatz wird erreicht, daß die Schwingungen der einzelnen Teilleiter besser miteinander ge- und verkoppelt werden. Der Abstandhalterrahmen wird dadurch gezwungen, für die Bewegungen der Teilleiter ein Widerlager zu bilden, so daß durch die Relativbewegungen im Gelenk die gewünschte Dämpfung der Schwingungen erzeugt wird.

Der Erfindung liegt die Aufgabe zugrunde, den beispielsweise aus US-A-39 79 553 bekannten Feldabstandhalter so weiterzubilden, daß die Dämpfung bei Auslenkungen der Leiterseilklemmen weiter verbessert wird. Die Lösung dieser Aufgabe ist im kennzeichnenden Teil des Anspruches 1 angegeben.

Der Aufbau des Gelenkkernes aus zwei Hälften ermöglicht es, die Stärke und den Querschnitt der elastischen Schicht genau entsprechend den erwünschten Bewegungs- und Dämpfungseigenschaften zu dimensionieren. Insbesondere wurde ein sehr sensibles Ansprechen erreicht. Außerdem lassen sich die gefürchteten Teilfeldschwingungen, die durch in Mastnähe angeordnete Schwingungsdämpfer nicht beeinflußbar sind, wirkungsvoll dämpfen. Auch wird eine bessere Bindung sowie Homogenität des vulkanisierten Materials erreicht.

Gemäß Anspruch 2 sind an sich bekannte Leichtbau-Seilklemmen durch Weiterentwicklung der Form- und Material-Leichtbauweise fortgebildet.

Die geringe Masse dieser Konstruktion ermöglicht ein besonders sensibles Ansprechen auch auf geringfügige Seilbewegungen.

Durch die Maßnahme nach Anspruch 3 wird für die Dämpfung der Leiterschwingungen von der Tatsache Gebrauch gemacht, daß obenliegende Leiter infolge von unterschiedlichen Zugspannungen ein etwas anderes Schwingungsverhalten zeigen als die untenliegenden Leiter. Durch den angegebenen Höhenversatz dämpfen sich die Schwingungen unter Ausnutzung des Superheterodyneeffektes gegenseitig.

Der gleiche Effekt wird gemäß Anspruch 4 erreicht; hieraus ist ersichtlich, daß der Mittelpunkt des schwingungsdämpfenden Systems nicht unbedingt lotrecht unter dem Mittelpunkt des geometrischen Systems liegen muß.

Gemäß den Ansprüchen 5 und 6 ist der selbstdämpfende Feldabstandhalter für horizontale Zweierbündel weitergebildet. Bei derartigen Bündeln entfällt der schwingungsdämpfende Einfluß eines oder mehrerer tieferliegender Leiter-Seile. Die beabsichtigte Wirkung ist hier durch eine besonders massebehaftete Gestaltung des Mittelteiles bewirkt.

In den Ansprüchen 7-12 sind weitere vorteilhafte Ausgestaltungen des Erfindungsgegenstandes angegeben.

Die Zusammensetzung des Gelenkes aus zwei Hälften und die speziellen Mantelformen (Ansprüche 14-17), die den Elastikteil begrenzen, sind besonders vorteilhaft, um eine möglichst gleichmäßige Beanspruchung des Gummivolumens zu erreichen. Durch die Zweiteiligkeit des Gelenkes wird es außerdem möglich, das Gelenk bei der Montage unter eine Druckvorspannung zu setzen. Dadurch wird die Eigendämpfung des Elastikmaterials erhöht. Dies ist auch die Erklärung für die relativ niedrige Shore-Härte des Gummis im unverspannten Zustand (Anspruch 13). Die Steigerung der Eigendämpfung des Gummis und dadurch eine entsprechende Elastizitätscharakteristik kann durch den Überstand gemäß Anspruch 18 und 19 gesteuert werden. Dieser Überstand wird darüber hinaus in jedem Falle so groß gewählt, daß auch bei den größten möglichen Ausschlägen des Hebels gegenüber dem Mittelteil das elastische Material immer noch unter einer Druck-Vorspannung verbleibt. Durch das Vermeiden jeglicher Zugbeanspruchung dieses Materials sind Funktion und Lebenserwartung entscheidend verbessert.

Die in Anspruch 15 u.a. angegebene formschlüssige Verbindung, hier z.B. mittels Vierkant-Schaft, läßt sich ebenso gut auch durch andere Formgebungen verwirklichen, z.B. durch andere polygonale oder auch ovale u.dgl. Querschnittsformen. Leicht zu fertigen ist ein zylindrischer Schaft, der an geeigneten Stellen von den Formschluß bewirkenden Stiften durchsetzt ist, welche in entsprechende Öffnungen in den formschlüssig zu verbindenden Teilen eingreifen.

Gemäß Anspruch 20 wird durch die spezielle Außenkontur des elastischen Materials in vorteilhafter Weise eine nach allen Bewegungsrichtungen nahezu gleichmäßige Dämpfung erzielt. Trotz dieses Vorteiles, der sich bei Schwingungen bemerkbar macht, ist im Falle des Kurzschlusses im Bündelleiter eine Verhärtung des elastischen Materials gegeben, so daß eine dauerhafte stabile Abstandhaltung gewährleistet ist.

Die im Anspruch 21 angegebenen Maßnahmen bewirken, daß die schwingungsdämpfende Wirkung des elastischen Gelenkes nicht durch vom Hebel hervorgerufene Störwirkungen, insbesondere störende Massen, Hebelängen u.dgl. negativ beeinflußt wird. Dies betrifft insbesondere auch die Maßnahmen gemäß Anspruch 26.

Ein leichter Austausch von Klemmen gegen solche anderer Dimension ist ein zusätzlicher Vorteil. Generell erleichtern die Maßnahmen gemäß den Ansprüchen 21-24 in ergänzend vorteilhafter Weise die Montage.

Ausführungsbeispiele der Erfindung werden nachfolgend unter Bezugnahme auf die Zeichnung erläutert; in dieser zeigen:

| | |
|---|---|
| Fig. 1 | den selbstdämpfenden Feldabstandhalter für ein Vierer-Bündel, in Seitenansicht; |
| Fig. 1a | das zu einem Leiter hinweisende Ende eines Hebels samt Seilklemme, im Schnitt; |
| Fig. 2 | ein sphärisches Gelenk, in der Ebene der drehhemmenden Schraube geschnitten; |
| Fig. 3 | die Draufsicht auf das Ende eines Mittelteil-Armes samt sphärischem Gelenk, teilweise geschnitten, einschließlich Seilklemme; |
| Fig. 4 | den selbstdämpfenden Feldabstandhalter für ein Dreier-Bündel, in Seitenansicht; |
| Fig. 5 | den selbstdämpfenden Feldabstandhalter für ein Zweier-Bündel, in Seitenansicht; Fig. 6 eine Hälfte des eigentlichen sphärischen Gelenkes, in der Ebene der Schrauben-Bohrung geschnitten; |
| Fig. 7 | die Außenansicht der Hälfte gem. Fig. 6; und |
| Fig. 8 | eine Gelenk-Hälfte analog Fig. 6, jedoch mit etwas anderer Formgestaltung der Außenfläche des Mittelstükkes sowie der Innenwand des äußeren Gehäuses. |

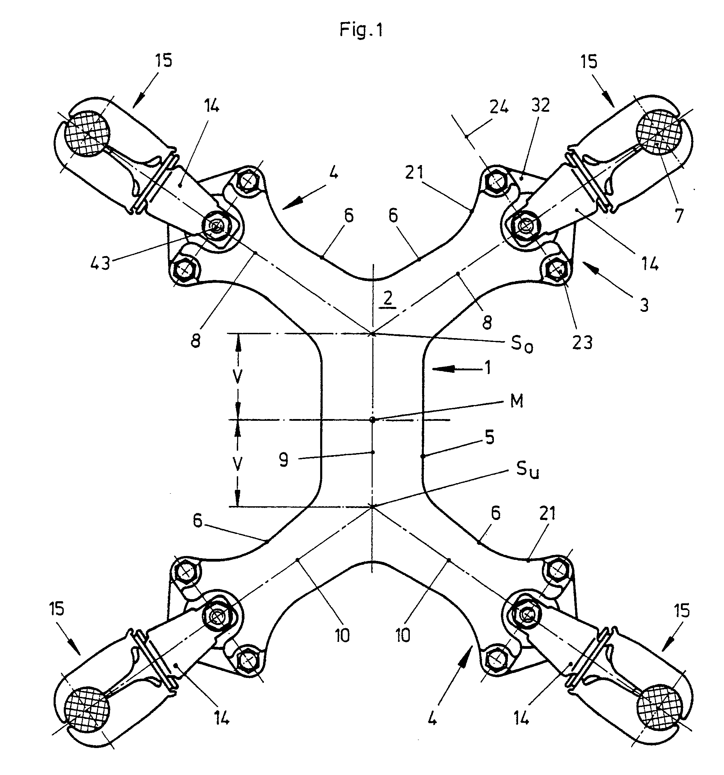

Fig. 1 zeigt zunächst ein Mittelteil (1) eines Feldabstandhalters für ein Viererbündel. Nach diesem Beispiel ist das Mittelteil (1) aus zwei einander parallelen, in erster Annäherung doppel-Y-förmigen Hälften (2) gebildet, die gegenseitig um das für den Einbau von elastischen Gelenken (3) benötigte Maß beabstandet sind. Es wäre jedoch auch eine einstückige Ausbildung des Mittelteiles möglich, sofern nur gabelförmige Aufnahmen (4) für die Gelenke (3) vorgesehen sind. Sämtliche Metallteile des Abstandhalters sind zweckmäßigerweise aus einer Leichtmetallegierung gefertigt. Jede Hälfte (2) besteht hier aus einem lotrechten Steg (5), von dessen Enden aus je ein Arm (6) in Richtung zum zugehörigen Leiter (7) weist. Die Mittellinien (8) der oberen Arme decken sich mit den jeweiligen Längsachsen der Hebel (14) und haben einen gemeinsamen oberen Schnittpunkt (So) mit der Mittellinie (9) des Steges (5). Die Mittellinien (10) der unteren Arme besitzen analog einen unteren Schnittpunkt (Su) ebenfalls mit der lotrechten Mittellinie (9). Gegenüber dem geometrischen Mittelpunkt (M) des Viererbündels weisen die oberen und unteren Schnittpunkte (So, Su) jeweils den gleichen Höhen-Versatz (V) auf. Durch diesen Höhen-Versatz (V) ist ein schnelleres Ansprechen der Dämpfungsglieder erreicht. Die Dämpfungsglieder, welche jeweils ein Bestandteil der elastischen Gelenke (3) bilden, werden später erläutert. Beim Beispiel gemäß Fig. 1 sind sowohl die oberen als auch die unteren Mittellinien (8,10) der Arme (6) identisch mit den Mittellinien bzw. Längsachsen der Hebel (14) zwischen dem jeweiligen elastischen Gelenk (3) und dem Halteteil (15) des Leiter-Seiles (7). Dies ist jedoch keine Grundvoraussetzung, sofern nur der erforderliche Versatz gegenüber dem geometrischen Mittelpunkt (M) des Leiterbündels gegeben ist.

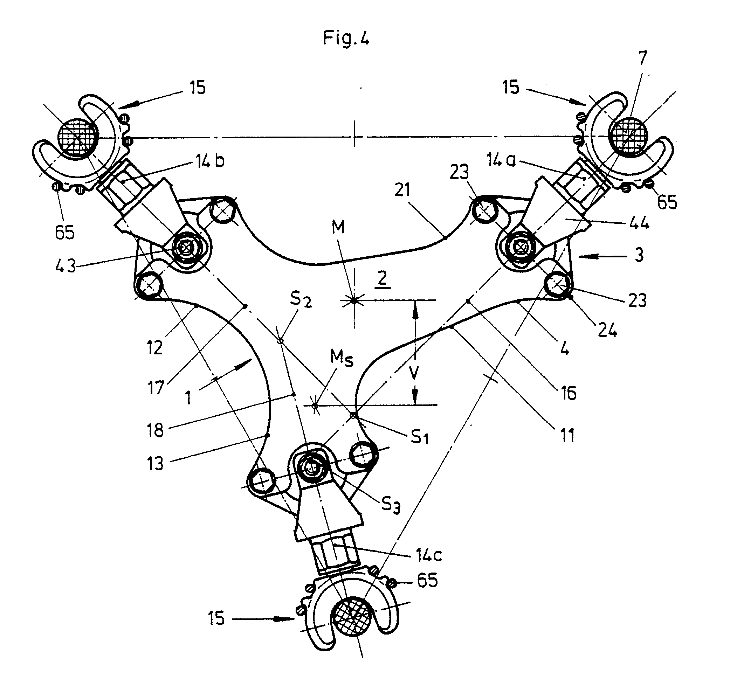

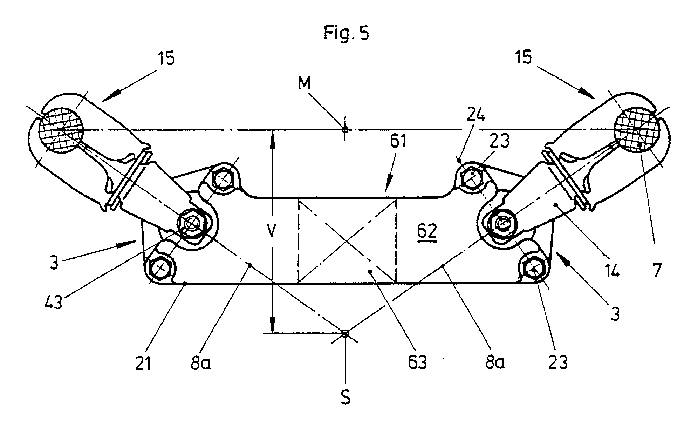

Für bestimmte Anwendungsfälle kommt auch eine unsymmetrische Ausbildung des selbstdämpfenden Feldabstandhalters in Betracht. Dies ist in Fig. 4 anhand eines Feldabstandhalters für ein Dreierbündel darstellbar. Dort schneiden sich die Längsachsen bzw. Mittelinien (16,17,18) der drei Hebel (14a,14b,14c) jeweils paarweise in drei Schnittpunkten (S1,S2,S3). Diese bilden ein Dreieck, dessen System-Mittelpunkt (Ms) um einen lotrechten Versatz (V) unterhalb der geometrischen Mitte (M) des Dreierbündels der Leiterseile (7) liegt. Diese Anordnung wird durch die unsymmetrische Ausgestaltung der Arme des Mittelteils (1) erzielt. Dieses weist einen oberen langen Arm (11), einen oberen kurzen Arm (12) und einen demgegenüber nochmals verkürzten unteren Arm (13) auf. Die elastischen Gelenke (3) sind analog den Fig. 1 und 5 ausgebildet. Dazu weisen die Freienden der Arme (11,12,13) die entsprechenden Gabelaufnahmen (4) auf.

Auch beim Feldabstandhalter für Zweierbündel gemäß Fig. 5 ist der lotrechte Versatz zwischen dem geometrischen Mittelpunkt (M) des Leiter-Bündels und dem Schnittpunkt (S) der beiden Mittellinien (8a) bzw. Längsachsen der Hebel (14) vorhanden. Hierin bezeichnet (61) ebenfalls das Mittelteil, welches aus zwei sich einander deckenden Hälften (62) gebildet sein kann. Da bei einem waagerechten Zweierbündel die Wirkung von einem oder auch mehreren untenliegenden Leitern (7) entfällt, muß hier das Mittelteil (61) deutlich massebehaftet sein. Dies kann durch dickere Dimensionierung der Hälften (62) oder auch durch zusätzlich angebrachte Massenanhäufungen (Zusatzmasse 63) verwirklicht sein. In Fig. 5 sind ferner Hebel (14) mit Mittellinien (8a) und Halteteile (15) für Leiter-Seile (7) dargestellt. Diese Mittellinien (8a) schneiden einander in einem Schnittpunkt (S). Dieser ist lotrecht um einen Versatz (V) unterhalb des geometrischen Mittelpunktes (M) der beiden Leiter gelegen. Die Hebel (14) sind ebenfalls über elastische Gelenke (3) mit dem Mittelteil (1) verbunden.

Analog Fig. 4 kann es zweckmäßig sein, den Abstandhalter nach Fig. 5 in seinem Mittelteil (61) unsymmetrisch zu gestalten, so daß der Schnittpunkt (S) seitlich versetzt zur geometrischen Mitte (M) des Seilbündels liegt.

Der Feldabstandhalter nach Fig. 5 kann in gleicher Formgestalt auch für senkrechte Zweierbündel verwendet werden. Die Aufnahmen am Mittelteil weisen (nicht gezeichnete) Anschläge auf, um die Auslenkung des Hebels (14) zu begrenzen.

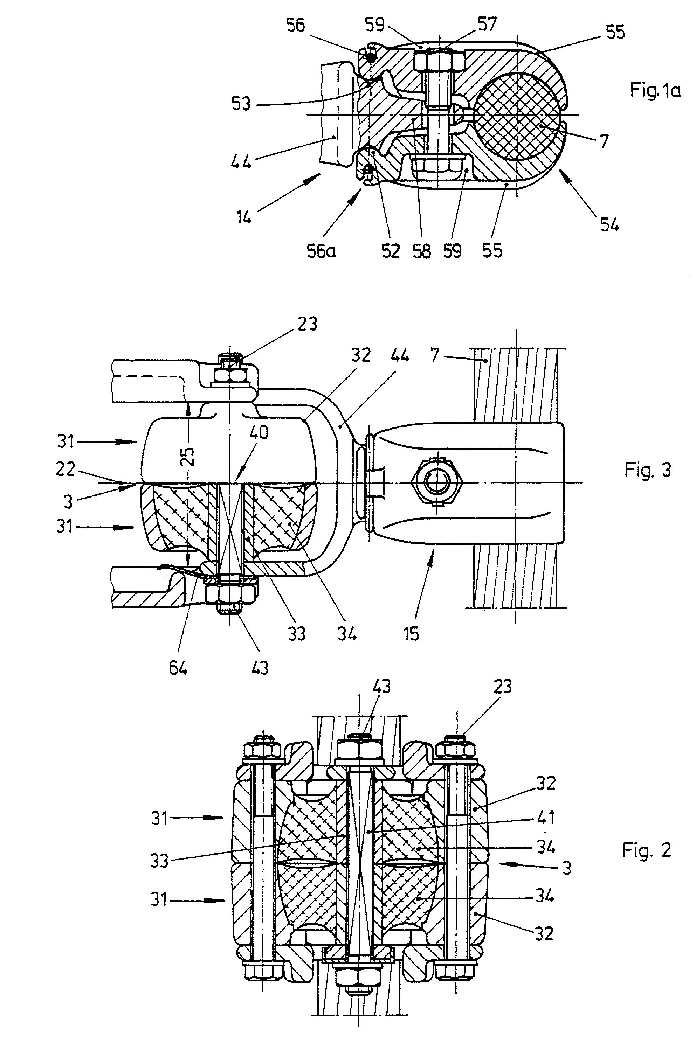

Bei jeder gabelförmigen Aufnahme (4) der verschiedenen Mittelteile (1,61) ist gemäß Fig. 3 zwischen die Hälften (2,60) des Mittelteiles (1,61) je ein elastisches Gelenk (3) eingebaut. Gemäß den Fig. 1,4 und 5 hat die Aufnahme (4) die Formgestalt von jeweils einer Gabel (21). Zwischen die zur Symmetrieebene (22) hinweisenden Innenflächen der Gabel (21) ist der feststehende Teil des elastischen Gelenkes eingefügt und mittels Schrauben (23) derart gehalten, daß die Verbindungsachse (24) zwischen Schrauben (23) mit den Mittellinien (8,8a,10; 16,17,18) jeweils rechte Winkel bildet. Die bei diesem Beispiel angewandte Befestigung der elastischen Gelenke (3) durch Schrauben erbringt den Vorteil, daß leicht ein Anpassen des Mittelteiles (1,61) an die jeweiligen Abmessungen des elastischen Gelenkes (3) möglich ist.

Der Aufbau der einzelnen elastischen Gelenke (3) wird zunächst unter Hinweis auf die Fig. 2 und 3 beschrieben. Demnach besteht das Gelenk (3) aus zwei gleichen, symmetrisch zur Symmetrieebene (22) eingebauten Hälften (31). Jede Hälfte (31) ist aus einem äußeren Gehäuse (32), einem Mittelstück (33) und einem einvulkanisierten, also stoffschlüssig verbundenen elastischen Material (34) gebildet. Der zweiteilige Aufbau des Gelenkes (3) ist sehr vorteilhaft; er erleichtert die Fertigung und insbesondere das Aufbringen einer Vorspannung, wie dies noch erläutert wird. Bei einteiliger Ausführung ließe sich die Vorspannung auf das Material (34) beispielsweise durch Verformen von Randbereichen des Gehäuses (32) oder/und des Mittelstückes (31) nach erfolgtem Vulkanisieren aufbringen.

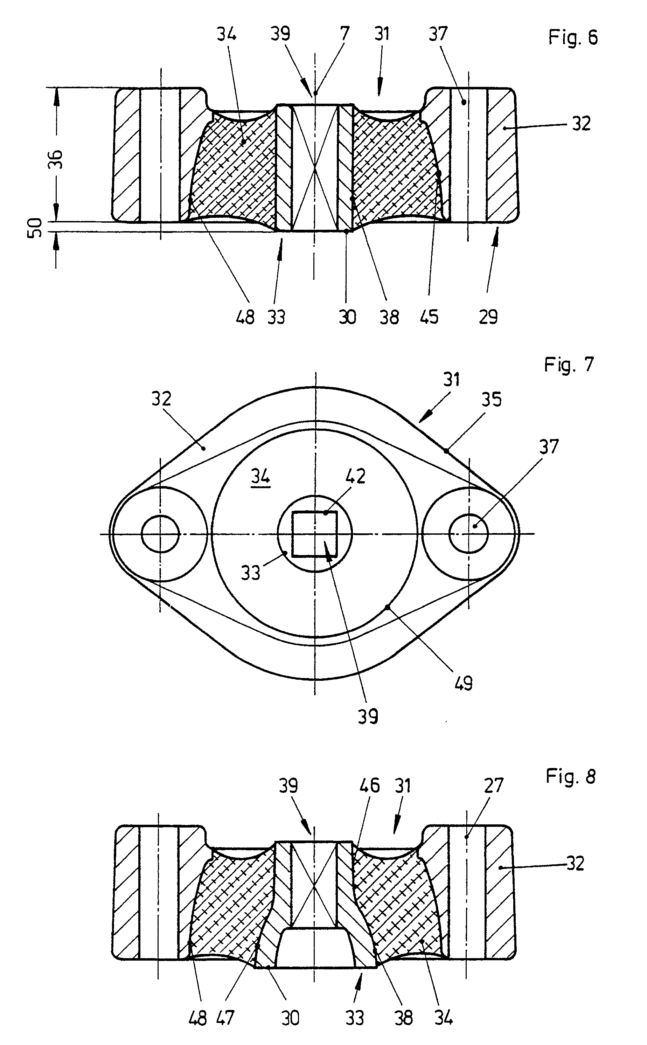

Einzelheiten einer Hälfte (31) des sphärischen, elastisch selbstdämpfenden Gelenkes (4) gehen aus den Fig. 6-8 hervor. Danach hat das äußere Gehäuse (32) in der Draufsicht die Umrißform eines Parallelogrammes (35) mit stark abgerundeten Kanten. Die Höhe (36) des äußeren Gehäuses (32) hängt u.a. von den gewünschten Dämpfungseigenschaften ab. Wie bereits erwähnt, lassen sich durch den Aufbau des Mittelteiles (1,61) bzw. die Beabstandung der beiden Hälften (2,62) leicht Gelenke (3) mit unterschiedlicher Kennung einbauen. Zum Durchführen der Schrauben (23) sind entsprechend beabstandete Bohrungen (37) vorhanden. Die Außenfläche (38) des Mittelstückes (33) ist als Rotationskörper gestaltet. Zentrisch ist das Mittelstück (33) von einer Öffnung (39) durchsetzt, die das Einführen eines drehhemmend ausgebildeten Schaftes (40) einer auch zum Verbinden mit einem Gabel-Teil (44) dienenden Schraube (43) ermöglicht.

Auch die Innenwand (48) der zur Aufnahme des elastischen Materials (34) dienenden Öffnung (49) im äußeren Gehäuse (32) hat die Formgestalt eines zur Achse konzentrischen Rotationskörpers.

Gemäß Fig. 6 hat die Außenfläche (38) des Mittelstückes (33) die Form eines Zylindermantels, während die Innenwand (48) des äußeren Gehäuses (32) als Kugelmantelring (45) gestaltet ist. Dies erbringt den Vorteil, daß beim vollständigen elastischen Gelenk aus zwei Hälften die Innenwände (48) zwei Ringausschnitte aus einem Kugelmantel bilden. Das zwischen die Innenwand (48) des äußeren Gehäuses (32) und die Außenfläche (38) des Mittelstückes einvulkanisierte elastische Material (34) besteht aus Polychloropren (beispielsweise EPDM); auch Neoprene kann verwendet werden. Als bestgeeignet hat sich eine Shore-Härte von etwa 40 erwiesen. Selbstverständlich ist auch Gummi, vorzugsweise synthetischer Gummi, mit entsprechender Shore-Härte geeignet. Wesentlich ist die stoffschlüssige Verbindung des elastischen Materials mit den angrenzenden Metall-Wänden, um Spaltkorrosion mit Sicherheit zu vermeiden, die nach heutigen Erkenntnissen bei formschlüssiger Verbindung oder auch Anwendung von Klebung mit Sicherheit nach einiger Zeit zu erwarten ist. Auch wird nach den heutigen Erkenntnissen die Verwendung eines elektrisch nicht-leitenden Materials vorgezogen, was jedoch den Einbau von Potentialausgleichern (64) als zweckmäßig erscheinen läßt; in Fig. 3 ist ein solcher Potentialausgleicher (64) in Form einer Verbindungsfahne zwischen den Gabelenden der Hebel (14,14a,14b,14c) bzw. Mittelteile (1,61) eingezeichnet.

Beim Beispiel nach Fig. 8 ist die äußere Formgestalt des Gehäuses (32) analog wie beim vorbeschriebenen Beispiel. Dies betrifft auch sämtliche weiteren Einzelheiten der betreffenden Hälfte (31) des elastischen Gelenkes (3) mit Ausnahme der Gestaltung der Außenfläche (38) des Mittelstückes (33). Hier hat etwa die obere Hälfte (gemäß Fig. 8) des Mittelstückes (33) zwar ebenfalls die Form eines Zylinders, die untere Hälfte weist jedoch etwa eine Glockenform auf. Insbesondere ist der zum elastischen Material hinweisende Bereich im Querschnitt nach Art eines Kugelmantels durchgekrümmt. Hierdurch ist erreicht, daß das elastische Material in sämtlichen Querschnitten etwa die gleiche Stärke aufweist. Damit wird bei zusammengesetzten Hälften für das elastische Material (34) eine noch bessere Annäherung an die Kugelform und damit eine annähernd gleiche Dämpfungswirkung in allen drei Raumrichtungen erzielt.

Letztgenannter Vorteil wird noch weiter verbessert, wenn wie vorgesehen, bei der Montage durch Anziehen der Schrauben (23) der aus den Fig. 6 und 8 ersichtliche Überstand (50) des inneren Randes des Mittelstückes (33) gegenüber der beiden aneinanderliegenden Stirnflächen (29) der Gehäuse (32) zumindest angenähert verschwindet. Im nicht eingebauten Zustand liegt dieser Überstand (50) in der Größenordnung zwischen 1 und 4 mm. Durch das Verschwinden dieses Überstandes wird die erwähnte Vorspannung des elastischen Materials (34) erzielt, was ebenfalls zur Verbesserung der elastischen Dämpfung beiträgt. Da ferner die Vorspannung so hoch gewählt ist, daß auch bei vollem Ausschlag des Gelenkes das elastische Material immer noch unter Druckspannung verbleibt, ist nicht nur der Stoffschluß zwischen Metall und elastischem Material entscheidend verbessert, sondern auch dessen Lebenserwartung ungewöhnlich erhöht.

Gemäß Fig. 1a und 3 hat der Hebel (14) an seinem nach innen weisenden Ende die Formgestalt einer Gabel (44), welche unter Vorspannung die beiden Hälften (31) des elastischen Gelenkes (3) umgreift. Das Halten unter Verhinderung eines gegenseitigen Verdrehens der Mittelstücke (33) gegenüber der Gabel (44) erfolgt durch die drehhindernde Gestalt des Schaftes der Schraube (43). In Richtung zum Leiter (7) hin hat der Hebel (14) den Querschnitt eines Lanzetts (58). In Ausnehmungen (53) greifen Wulste (52) an den inneren Enden der beiden Hälften (55) der Seilklemme (54) ein. Die beiden Hälften (55) sind auch im für die Montage geöffneten Zustand durch einen elastischen Ring (56) unverlierbar am Hebel (14) gehalten. Das Schließen der Klemme erfolgt durch eine unverlierbare Schraube (57), die in vorteilhafter Weise zudem so eingebaut ist, daß ein Schlüssel von oben her am Schraubenkopf angesetzt werden kann. Die zugehörige Mutter ist in der Klemmenhälfte (55) durch Formschluß verdrehfest befestigt. Die beschriebene Konstruktion erlaubt es im Bedarfsfalle leicht, Klemmen-Hälften (55), die zu einem bestimmen Seildurchmesser gehören, gegen solche für einen anderen Durchmesser auszutauschen.

Die beschriebene Konstruktion zeichnet sich ferner dadurch aus, daß keine vorspringenden Teile vorhanden sind, die zu Koronaeffekten führen könnten.

Erfindungswesentlich ist ferner die geringe Masse sämtlicher vom elastischen Gelenk nach außen ragenden Teile, weil hierdurch die erwünschte Beweglichkeit des Leiter-Seiles verbessert wird. Abgesehen von der beschriebenen Gestaltung trägt zu diesem erwünschten Effekt noch bei, daß die Klemmenteile aus Aluminium geschmiedet sind. Jede Klemmen-Hälfte (55) ist ferner als Körper gleicher Biegebeanspruchung gestaltet.

Die gleichen Vorteile sind auch der aus Fig. 4 ersichtlichen Gestaltung der Hebel (14a,14b,14c) zu eigen. Zum Halten des Leiter-Seiles (7) dient hier eine nach außen offene Gabel. In dieser ist der Leiter durch die beispielsweise aus DE-OS 26 18 778 bekannten Haltespiralen (65) gehalten. Das Gabel-Teil (44) beim elastischen Gelenk (3) ist hier mit der Haltegabel für den Leiter (7) über eine Verpressung verbunden. Bezugszeichenliste

| | |
|---|---|
| 1 | Mittelteil |
| 2 | Hälfte |
| 3 | elastisches Gelenk |
| 4 | Aufnahme (-Gabel) |
| 5 | lotrechter Steg |
| 6 | Arm |
| 7 | Leiter (-Seil) |
| 8 | Mittellinie, obere |
| 9 | Mittellinie, lotrechte |
| 10 | Mittellinie, untere |
| 11 | oberer langer Arm |
| 12 | oberer kurzer Arm |
| 13 | unterer Arm |
| 14 | Hebel (14a,14b,14c) |
| 15 | Halteteil |
| 16 | Mittellinie von 14a |
| 17 | Mittellinie von 14b |
| 18 | Mittellinie von 14c |
| 19 | Mittellinie von 14 |
| 21 | Gabel |
| 22 | Symmetrieebene |
| 23 | Schrauben |
| 24 | Verbindungsachse |
| 25 | Distanz-Maß |
| 27 | Achse |
| 29 | Fläche |
| 30 | Fläche |
| 31 | Hälfte |

| | |
|---|---|
| 32 | äußeres Gehäuse |
| 33 | Mittelstück |
| 34 | elastisches Material |
| 35 | Parallelogramm |
| 36 | Höhe |
| 37 | Bohrung |
| 38 | Außenfläche |
| 39 | Öffnung |
| 40 | Schaft |
| 41 | Vierkant-Schaft |
| 42 | Vierkant-Bohrung |
| 43 | Schraube, mit Drehhemmung |
| 44 | Gabel-Teil |
| 45 | Kugelmantelring |
| 46 | Wandteil, zylinderförmig |
| 47 | Wandbereich |
| 48 | Innenwand |
| 49 | Öffnung |
| 50 | Überstand |
| 51 | elastisches Material |
| 52 | Wulste |
| 53 | Ausnehmung |
| 54 | Seilklemme |
| 55 | Seilklemmen-Hälfte |
| 56 | elastischer Ring |
| 56a | Rille |
| 57 | unverlierbare Schraube |
| 58 | Lanzett |
| 59 | Ausnehmungen |
| 61 | Mittelteil |
| 62 | Hälfte |
| 63 | Zusatzmasse |
| 64 | Potentialausgleicher |
| 65 | Haltespirale |
| S = | Schnittpunkt |
| So = | oberer Schnittpunkt |
| Su = | unterer Schnittpunkt |
| M = | geometrischer Mittelpunkt |
| Ms = | System-Mittelpunkt |
| V = | vertikaler Versatz |
| W = | Winkel |

**Patentansprüche**

1.  Selbstdämpfender Feldabstandhalter für Bündelleiter von Freileitungen mit
    - einem starren Mittelteil (1), und
    - sich zu den Leiter-Seilen (7) hin erstreckenden, In Halteteilen (15) endenden Hebeln (14,14a,14b,14c), die mit dem Mittelteil (1) über jeweils ein selbsthemmendes elastisches sphärisches Gelenk (3) verbunden sind, wobei
    - - jedes Gelenk (3) aus einem Mittelstück, einem äußeren Gehäuse und einem dazwischen unter Vorspannung angeordneten, elastischen und dämpfend wirkenden Material besteht,

- - jeweils das Gehäuse und das Mittelstück drehfest mit den benachbarten Halterteilen verbunden sind und
- - sich die Längsachsen (Mittellinien 8,10;8a,16,17,18) der Hebel (14,14a,14b,14c) in mindestens einem Punkt schneiden,
- - sich maximal zwei längsachsen (Mittellinien 8,10;8a,16,17,18) der Hebel (14,14,14b,14c) außerhalb der geometrischen Mitte (M) der Leiterseile (7) in Schnittpunkten (So,Su; S1,S2,S3;S) schneiden,
- - diese Schnittpunkte (So,Su; S1,S2,S3;S) gegenüber der geometrischen Mitte (M) um einen vertikalen Versatz (V) beabstandet sind, und
- - das selbstdämpfend elastische Material (34) dieses Gelenkes (3) mit den angrenzenden Flächen (38,48) sowohl des Mittelstückes (33) als auch des äußeren Gehäuses (32) ausschließlich stoffschlüssig (z.B. vulkanisiert) verbunden ist,

dadurch gekennzeichnet,

daß jedes elastische Gelenk (3) als selbsthemmendes sphärisches Gelenk gestaltet ist, aus Zwei identischen, symmetrisch zueinander eingebauten Hälften (31) besteht und daß jede Hälfte (31) aus einem äußeren Gehäuse (32), einem Mittelstück (33) sowie aus einem zwischen Gehäuse (32) und Mittelstück (33) eingefügten sowie stoffschlüssig verbundenen elastischen Material (34) gebildet ist, wobei die Innenwand (48) des äußeren Gehäuses (32) als Kugelmantelring geformt ist.

2. Feldabstandhalter nach Anspruch 1,
dadurch gekennzeichnet,
daß das Halteteil (15) für das Leiterseil (7) in Form- und Material-Leichtbauweise gestaltet ist.

3. Feldabstandhalter für Viererbündel, nach Anspruch 1 oder 2,
dadurch gekennzeichnet,
daß die Längsachsen (Mittellinien 8) der oberen Hebel (14) einander in einem oberen Schnittpunkt (So) sowie die Längsachsen (Mittellinien 10) der unteren Hebel (14) in einem unteren Schnittpunkt (Su) schneiden und daß die beiden Schnittpunkte (So,Su) in lotrechter Richtung um einen Vertikal-Versatz (V) gegenüber dem geometrischen Mittelpunkt (M) der Leiterseile (7) versetzt sind (Fig. 1).

4. Feldabstandhalter für ein Dreierbündel, nach Anspruch 1 oder 2,

dadurch gekennzeichnet,
- daß sich die Längsachsen (Mittellinien 16,17,18) der drei Hebel (14a,14b,14c) jeweils paarweise in drei Schnittpunkten (S1,S2,S3) schneiden und
- daß diese Schnittpunkte (S1,S2,S3) ein Dreieck bilden, dessen System-Mittelpunkt (Ms) um einen lotrechten Versatz (V) unterhalb der geometrischen Mitte (M) des Dreierbündels der Leiterseile (7) liegt (Fig. 4).

5. Feldabstandhalter für Zweierbündel nach Anspruch 1 oder 2,
dadurch gekennzeichnet,
- daß die zwei von den beiden Leitern (7) ausgehenden Hebel (14) miteinander einen sich nach oben öffnenden Winkel (W) bilden und über je ein elastisches Gelenk (3) mit einem Mittelteil (61) verbunden sind,
- daß sich die Längsseiten (Mittellinien 8a) der Hebel (14) in einem Schnittpunkt (S) schneiden und daß dieser Schnittpunkt (S) um einen lotrechten Versatz (V) unterhalb des geometrischen Mittelpunktes (M) des Leiter-Bündels liegt (Fig. 5).

6. Feldabstandhalter nach Anspruch 5,
dadurch gekennzeichnet,
daß das Mittelteil (61) mit erhöhter Masse gestaltet ist.

7. Feldabstandhalter nach Anspruch 1,2 oder 3,
dadurch gekennzeichnet,
- daß das Mittelteil (1) die Formgestalt eines Doppel-Y hat, dessen schräg verlaufenden Arme (6) in je einer Aufnahme (4) für ein elastisches Gelenk (3) münden,
- daß die oberen Mittellinien (8) der Arme (6) mit der lotrechten Achse (9) einen oberen Schnittpunkt (So) und die unteren Mittellinien (10) mit der Achse (9) einen unteren Schnittpunkt (Su) haben und
- daß die beiden Schnittpunkte (So,Su) um einen lotrechten Versatz (V) beabstandet sind.

8. Feldabstandhalter nach Anspruch 1,3 oder 7,
dadurch gekennzeichnet,
daß bei einem Viererbündel mit einer horizontalen Entfernung der Leiter (7) von 400 mm der Versatz (V) etwa 50-70 mm beträgt.

9. Feldabstandhalter nach Anspruch 3,4,5 oder 7,
dadurch gekennzeichnet,
- daß das Mittelteil (1) aus zwei identischen Hälften (2) gebildet ist,

- daß jede gabelförmige Aufnahme (4) in Nähe jedes Gabelendes je eine Bohrung aufweist,
- daß durch diese Bohrung eine das zugehörige elastische Gelenk (3) haltende Schraube (23) durchgeführt ist, und
- daß die einander zugewandten Innenflächen der beiden Aufnahmen (4) der Hälften (2) um das vom Gelenk (3) vorgegebene Maß (25) beabstandet sind.

10. Feldabstandhalter nach Anspruch 1 oder 4,
    dadurch gekennzeichnet,
    - daß das Mittelteil (1) die Formgestalt eines unsymmetrischen Y hat, dessen Arme (11,12,13) in je eine Aufnahme (4) für ein elastisches Gelenk (3) münden,
    - daß mindestens zwei der Längsachsen (Mittellinien 16,17,18) der Hebel (14a,14b,14c) zwischen je einem elastischen Gelenk (3) und einem Halteteil (15) einen gemeinsamen Schnittpunkt (S1, S2,S3) haben und daß der System-Mittelpunkt (Ms) des aus den Schnittpunkten (S1,S2,S3) gebildeten Dreiecks gegenüber dem geometrischen Mittelpunkt (M) des Seilbündels nach unten um einen lotrechten Versatz (V) beabstandet ist (Fig. 4).

11. Feldabstandhalter nach Anspruch 10,
    dadurch gekennzeichnet,
    daß die Mittellinien einen gemeinsamen Schnittpunkt haben und daß dieser gemeinsame Schnittpunkt um einen lotrechten Versatz unterhalb des geometrischen Mittelpunktes des Seilbündels liegt.

12. Feldabstandhalter nach Anspruch 10 oder 11,
    dadurch gekennzeichnet,
    daß bei einem Dreierbündel mit einem horizontalen Abstand der Leiter (7) von 400 mm der lotrechte Versatz (V) etwa 50-80 mm beträgt.

13. Feldabstandhalter nach einem der vorgenannten Ansprüche,
    dadurch gekennzeichnet,
    daß das elastische Material (34) des elastischen Gelenks (3) eine Shore-Härte von etwa 40 hat.

14. Feldabstandhalter nach einem der vorgenannten Ansprüche,
    dadurch gekennzeichnet,
    daß das äußere Gehäuse (32) des elastischen Gelenks (3) die Umrißform eines Parallelogrammes mit abgerundeten Kanten sowie mit zwei Halte-Bohrungen (37) hat.

15. Feldabstandhalter nach einem der vorgenannten Ansprüche,
    dadurch gekennzeichnet,
    daß das Mittelstück (33) des elastischen Gelenks (3) von einer zentrischen Öffnung (39) durchsetzt ist, deren Formgebung (z.B. Vierkant-Bohrung42) die Verdrehung einer einzuführenden Verbindungs-Schraube (43) verhindert und daß die Außenfläche (38) als Rotationskörper gestaltet ist.

16. Feldabstandhalter nach Anspruch 15,
    dadurch gekennzeichnet,
    daß die Außenfläche (38) des Mittelstückes (33) ein Zylindermantel ist.

17. Feldabstandhalter nach Anspruch 15,
    dadurch gekennzeichnet,
    daß die Außenfläche (38) des Mittelstückes (33) glockenförmig mit einem zylinderförmigen, im eingebauten Zustand nach außen weisenden Wandteil (46) und einem sich daran nach innen anschließenden Wandbereich (47) gestaltet ist, der als Kugelwandring mit erheblich kleinerem Radius als bei der Innenwand (48) ausgebildet ist.

18. Feldabstandhalter nach einem der vorgenannten Ansprüche,
    dadurch gekennzeichnet,
    daß die zur Symmetrieebene (22) des Gelenks (3) hinweisende Fläche (30) des Mittelstückes (33) gegenüber der entsprechenden Fläche (29) des äußeren Gehäuses (32) vor dem Einbau einen überstand (50) hat und daß dieser überstand (50) im eingebauten Zustand auf nahezu Null reduziert ist.

19. Feldabstandhalter nach Anspruch 18,
    dadurch gekennzeichnet,
    daß der überstand (50) im nicht eingebauten Zustand etwa 1-4 mm beträgt.

20. Feldabstandhalter nach einem der vorgenannten Ansprüche,
    dadurch gekennzeichnet,
    daß im eingebauten Zustand der beiden Gelenk-Hälften (31) das elastische Material (34) jeweils die Außenkontur einer Kugelscheibe aufweist.

21. Feldabstandhalter nach einem der vorgenannten Ansprüche,
    dadurch gekennzeichnet,
    - daß der mit dem Gelenk (3) verbundene Hebel (14) zum Gelenk (3) hin die Formgestalt einer Gabel (44) und zum Leiter (7) hin eines Lanzetts (58) hat, in dessen nutförmigen Ausnehmungen (53) endseitige Wulste (52) der Seilklemmen-Hälften (55) einer Seilklemme (54) verrastet sind und

- daß die äußeren Enden der Seilklemmen-Hälften (55) durch eine unverlierbare Schraube (57) an den Leiter (7) angedrückt sind.

22. Feldabstandhalter nach Anspruch 21,
dadurch gekennzeichnet,
daß Kopf und Mutter der unverlierbaren Schraube (57) in Ausnehmungen (59) in den Seilklemmen-Hälften (55) eingelassen sind.

23. Feldabstandhalter nach Anspruch 21,
dadurch gekennzeichnet,
daß die Seilklemmen-Hälften (55) symmetrisch zur die Längsachse des Leiters (7) enthaltenden Mittelebene der Seilklemmen (54) ausgebildet sind.

24. Feldabstandhalter nach einem der Ansprüche 21 bis 23,
dadurch gekennzeichnet,
daß die beiden Hälften (55) auch im geöffneten Zustand der Seilklemme (54) durch einen in eine Rille (56a) in Nähe des inneren Endes der Seilklemme (54) eingelegten elastischen Ring (56) unverlierbar am Hebel (14) gehalten sind.

25. Feldabstandhalter nach einem der vorgenannten Ansprüche,
dadurch gekennzeichnet,
daß bei Verwendung eines elektrisch nicht leitenden elastischen Materials (34) im Gelenk (3) den Gelenk-Hälften (31) ein Potentialausgleicher (64) zugeordnet ist.

26. Feldabstandhalter nach einem der vorgenannten Ansprüche,
dadurch gekennzeichnet,
daß jede Seilklemmen-Hälfte (55) als Körper gleicher Biegebeanspruchung gestaltet und aus einer Aluminiumlegierung geschmiedet ist (Fig. 1a).

27. Feldabstandhalter nach einem der vorgenannten Ansprüche,
dadurch gekennzeichnet,
daß sowohl an jedem Arm (6) des Mittelteiles (1) als auch am inneren Ende jedes Hebels (14) eine als Nase gestaltete Hälfte einer Anschlagbegrenzung angebracht ist und daß durch den Zwischenraum zwischen den Anschlagflächen der Hälften in Mittelstellung von Hebel und Arm der im Kurzschlußfalle zulässige Ausschlag begrenzt ist.

## Claims

1. A self damping field spacer for bundle conductors of overhead lines with
   - a rigid central part (1), and
   - levers (14, 14a, 14b, 14c) extending towards the conductor cables (7) ending in holder components (15), which levers are connected to the central part (1) via a self-locking elastic spherical joint (3) each, wherein
     - - each joint (3) consists of a central component, an outer housing and, arranged between them, a prestressed elastic material having a damping effect,
     - - the housing and the central component are joined to the adjacent holder components and secured against rotation, and
     - - the longitudinal axes (median lines 8, 10; 8a, 16, 17, 18) of the levers (14, 14a, 14b, 14c) intersect in at least one point,
     - - at most, two longitudinal axes (median lines 8, 10; 8a, 16, 17, 18) of the levers (14, 14a, 14b, 14c) intersect outside the geometric centre (M) of the conductor cables (7) in points of intersection (SO, Su; S1, S2, S3; S),
     - - these points of intersection (SO, Su; S1, S2, S3; S) are offset relative to the geometric centre (M) by a vertical offset (V), and
     - - the self-damping elastic material (34) of this joint (3) is joined exclusively by material contact to the adjacent surfaces (38, 48) of both the central component (33) and of the outer housing (32) (for example, by vulcanization),
   characterized in that
   each elastic joint (3) is designed as a self-locking ball joint, that it consists of two identical halves (31) symmetrically installed with respect to each other and that each half (31) is formed by an outer housing (32), a central component 33), as well as, inserted between the housing (32) and the central component (33), an elastic material (34) joined by material contact, the inner wall (48) of the outer housing (32) being formed as a spherical jacket ring.

2. A field spacer according to claim 1,
   characterized in that
   the holder component (15) for the conductor cable (7) is executed in a lightweight design as regards shape and materials.

3. A field spacer for four-conductor bundles according to claim 1,
characterized in that
the longitudinal axes (median lines 8) of the upper levers (14) intersect each other in a top point of intersection (So) and the longitudinal axes (median lines 10) of the lower levers (14) in a bottom point of intersection (Su) and that the two points of intersection (SO, Su) are offset in the vertical direction by a vertical offset (V) relative to the geometrical centre (M) of the conductor cables (7) (Figure 1).

4. A field spacer for a three-conductor bundle according to claim 1 or 2,
characterized in that
- the longitudinal axes (median lines 16, 17, 18) of the three levers (14a,14b,14c) respectively intersect each other in pairs in three points of intersection (S1, S2, S3;) and
- that these points of intersection (S1, S2, S3) form a triangle whose system-centre (Ms) lies beneath the geometric centre (M) of the three-conductor bundle of the conductor cable (7) being displaced by a vertical offset (V) (Figure 4).

5. A field spacer for a two-conductor bundle according to claim 1 or 2,
characterized in that
- the two levers (14) starting from the two conductors (7) form together an upwardly opening angle (W) and are connected via one elastic joint (3) each to a central part (61),
- that the longitudinal sides (median lines 8a) of the levers (14) intersect each other in a point of intersection (S) and that this point of intersection lies beneath the geometrical centre (M) of the conductor bundle being displaced by a vertical offset (V) (Figure 5).

6. A field spacer according to claim 5,
characterized in that
the central part (61) is designed with an increased mass.

7. A field spacer according to claim 1, 2 or 3,
characterized in that
- the central part (1) has the shape of a double Y, the slanting arms (6) whereof lead into one receptacle (4) each for an elastic joint (3),
- that the upper median lines (8) of the arms (6) have a top point of intersection (So) with the vertical axis (9) and the lower median lines (10), a bottom point of intersection (Su) with the axis (9) and
- that the two points of intersection (So, Su) are interspaced by a vertical offset (V).

8. A field spacer according to claims 1, 3 or 7,
characterized in that
in the case of a four-conductor bundle with a horizontal interspacing of the conductors (7) of 400 mm, the offset (V) amounts to approximately 50-70 mm.

9. A field spacer according to claims 3, 4, 5 or 7,
characterized in that
- the central part (1) is formed of two identical halves (2),
- that each fork-shaped receptacle (4) has a hole near each fork end,
- that the screw (23) holding the associated joint (3) is passed through this hole, and
- that the inner faces of the two receptacles (4) of the halves (2) are interspaced by the dimension (25) given by the joint (3).

10. A field spacer according to claim 1 or 4,
characterized in that
- the central part (1) has the shape of an asymmetrical Y whose arms (11, 12, 13) lead into one receptacle (4) each for an elastic joint (3),
- that at least two of the longitudinal axes (median lines 16, 17, 18) of the levers (14a, 14b, 14c) have a common point of intersection (S1, S2, S3) between one elastic joint (3) and a holder component (15) each and that the system centre (Ms) of the triangle formed by the points of intersection (S1, S2, S3) is downwardly displaced relative to the geometrical centre (M) of the conductor bundle by a vertical offset (V) (Figure 4).

11. A field spacer according to claim 10,
characterized in that
the median lines have a common point of intersection and that this common point of intersection lies beneath the geometric centre of the conductor bundle being displaced by a vertical offset.

12. A field spacer according to claim 10 or 11,
characterized in that
in the case of a three-conductor bundle with a horizontal distance of 400 mm between the conductors (7), the vertical offset (V) amounts to approximately 50-80mm.

13. A field spacer according to one of the above mentioned claims,
    characterized in that
    the elastic material (34) of the elastic joint (3) has a Shore hardness of approximately 40.

14. A field spacer according to one of the above mentioned claims,
    characterized in that
    the outer housing (32) of the elastic joint (3) has the contour of a parallelogram with rounded edges and with two holding holes (37).

15. A field spacer according to one of the above mentioned claims,
    characterized in that
    the central component (33) of the elastic joint (3) is traversed by a central opening (39) whose shape (for example, a square hole (42)) prevents an insertable connecting screw (43) from rotating and in that the outer surface (38) is designed as a rotary body.

16. A field spacer according to claim 15,
    characterized in that
    the outer surface (38) of the central component (33) is a cylindrical barrel.

17. A field spacer according to claim 15,
    characterized in that
    the outer surface (38) of the central component (33) has a bell-shaped design with a cylindrical wall portion (46) pointing outwards in the installed state and, adjoining it towards the inside, wall portion (47) designed as a spherical jacket ring with a considerably smaller radius than at the inner wall (48).

18. A field spacer according to one of the above mentioned claims,
    characterized in that
    before installation, the face (30) pointing towards the plane of symmetry (22) of the joint (3) of the central component (33) has a projection (50) relative to the corresponding face (29) of the outer housing (32) and that this projection (50) is reduced almost to zero in the installed state.

19. A field spacer according to claim 18,
    characterized in that
    in the non-installed state, the projection (50) amounts to approximately 1 - 4mm.

20. A field spacer according to one of the above mentioned claims,
    characterized in that
    in the installed state of the two joint halves (31), the elastic material (34) has in each case the outer contour of a spherical washer.

21. A field spacer according to one of the above mentioned claims,
    characterized in that
    - towards the joint (3), the lever (14) connected to the joint (3) has the shape of a fork (44) and towards the conductor (7) of a lancet (58) in whose groove-shaped recesses (53) there engage bulges (52) at the end sides of the cable clamp halves (55) of a cable clamp (54) and
    - that the outer ends of the cable clamp halves (55) are pressed against the conductor (7) by a captive screw (57).

22. A field spacer according to claim 21,
    characterized in that
    the head and nut of the captive screw (57) are set in recesses (59) in the cable clamp halves (55).

23. A field spacer according to claim 21,
    characterized in that
    the cable clamp halves (55) are designed symmetrically to the median plane of the cable clamps (54) containing the longitudinal axis of the conductor (7).

24. A field spacer according to one of claims 21 to 23,
    characterized in that
    in the open state of the cable clamp (54) as well, the two halves (55) are also held nondetachably at the lever (14) by an elastic ring (56) inserted in a groove (56a) near the inner end of the cable clamp (54).

25. A field spacer according to one of the above mentioned claims,
    characterized in that
    when an electrically non-conductive material (34) is used in the joint (3), a potential equalizer (64) is assigned to the joint halves (31).

26. A field spacer according to one of the above mentioned claims,
    characterized in that
    each cable clamp half (55) is formed as a body with the same bending strain and that it is forged from an aluminium alloy (Figure 1a).

27. A field spacer according to one of the above mentioned claims,
characterized in that
one half of a limiter stop designed as a projection is arranged both at each arm (6) of the central part (1) and at the inner end of each lever (14), and that the displacement admissible in the case of a short circuit is limited by the gap between the stop faces of the halves in the central position of the lever and arm.

**Revendications**

1. Entretoise de champ auto-amortissante pour conducteurs de lignes électriques aériennes disposés en faisceau, comportant

   - une partie centrale rigide (1), et
   - reliés à la partie centrale (1) à chaque fois par une articulation à rotule élastique autobloquante (3), des leviers (14, 14a, 14b, 14c) qui s'étendent vers les câbles-conducteurs (7) et se terminent dans des pièces de retenue (15),

   chaque articulation (3) étant constituée par une pièce médiane, une enveloppe extérieure et, agencée entre elles, sans précontrainte, une matière élastique ayant un effet amortissant,

   - - l'enveloppe et la pièce médiane étant à chaque fois solidarisées en rotation aux pièces de retenue voisines, et
   - - les axes longitudinaux (lignes médianes 8, 10; 8a, 16, 17, 18) des leviers 14, 14a, 14b, 14c) se coupant en au moins un point,
   - - au maximum deux axes longitudinaux (lignes médianes 8, 10; 8a, 16, 17, 18) des leviers (14, 14a, 14b, 14c) se coupant en dehors du centre géométrique (M) des câbles-conducteurs (7), en des points d'intersection( So, Su; S1, S2, S3; S),
   - - lesquels points d'intersection (So, Su; S1, S2, S3; S) sont séparés du centre géométrique (M) par une distance ou déport vertical (V), et

   la matière élastique auto-amortissante (34) de cette articulation (3) étant solidarisée, exclusivement par liaison matérielle (par exemple par vulcanisation), aux surfaces adjacentes (38, 48) de la pièce médiane (33) tout aussi bien que de l'enveloppe extérieure (32),

   caractérisée

   par le fait que chaque articulation élastique (3) est conçue-réalisée en tant que rotule autobloquante et est constituée par deux moitiés identiques (31) montées avec une symétrie mutuelle, et par le fait que chaque moitié (31) est formée par une enveloppe extérieure (32), par une pièce médiane (33) ainsi que par une matière élastique (34) insérée et fixée par liaison matérielle entre enveloppe (32) et pièce médiane (33), la paroi intérieure (48) de l'enveloppe extérieure (32) étant façonnée en forme d'anneau à paroi sphérique.

2. Entretoise de champ selon revendication 1, caractérisée

   par le fait que la pièce de retenue (15) pour le câble-conducteur (7) est conçue-réalisée avec une forme et une matière du type construction légère.

3. Entretoise de champ pour faisceau de quatre conducteurs selon revendication 1 ou 2, caractérisée

   par le fait que les axes longitudinaux (lignes médianes 8) des leviers supérieurs (14) se coupent en un point d'intersection supérieur (So) et les axes longitudinaux (lignes médianes 10) des leviers inférieurs (14) se coupent en un point d'intersection inférieur (Su), et par le fait que les deux points d'intersection (So, Su) sont décalés, en direction verticale, par rapport au centre géométrique (M) des câbles-conducteurs (7), centre dont ils sont séparés par une distance verticale (V) (figure 1).

4. Entretoise de champ pour un faisceau de trois conducteurs, selon revendication 1 ou 2, caractérisée

   - par le fait que les axes longitudinaux (lignes médianes 16, 17, 18) des trois leviers (14a, 14b, 14c) se coupent deux à deux en trois points d'intersection (S1, S2, S3) et
   - par le fait que ces points d'intersection (S1, S2, S3) forment un triangle dont le centre de système (Ms) se trouve à une distance verticale (V) en dessous du centre géométrique (M) du faisceau de trois conducteurs (7) (figure 4).

5. Entretoise de champ pour un faisceau de deux conducteurs selon revendication 1, caractérisée

   - par le fait que les deux leviers (14) partant des deux conducteurs (7) forment ensemble un angle (W) s'ouvrant vers le haut et sont assemblés à une partie ou pièce médiane (61) à chaque fois par une articulation élastique (3),
   - par le fait que les côtés longitudinaux (lignes médianes 8a) des leviers (14) se coupent en un point d'intersection (S) et que ce point d'intersection (S) se trouve en dessous du centre géométrique (M) du faisceau de conducteurs, à une distance verticale (V) de ce centre (figure 5).

6. Entretoise de champ selon revendication 5, caractérisée
par le fait que la partie centrale (61) est réalisée avec une masse accrue.

7. Entretoise de champ selon revendication 1, 2 ou 3,
caractérisée
- par le fait que la partie centrale (1) possède la forme d'un double Y dont les bras obliques (6) débouchent chacun dans un logement (4) pour une articulation élastique (3),
- par le fait que les lignes médianes supérieures (8) des bras (6) ont un point d'intersection (So) avec l'axe vertical (9), et les lignes médianes (10) ont un point d'intersection inférieur (Su) avec l'axe (9), et
- par le fait que les deux points d'intersection (So, Su) sont séparés l'un de l'autre par une distance verticale (V).

8. Entretoise de champ selon revendication 1, 3 ou 7,
caractérisée
par le fait que, dans le cas d'un faisceau de quatre conducteurs, dans lequel les conducteurs (7) sont éloignés horizontalement de 400 mm, ladite distance verticale (V) est de l'ordre de 50 à 70 mm.

9. Entretoise de champ selon revendication 3, 4, 5 ou 7,
caractérisée
- par le fait que la partie centrale (1) est formée de deux moitiés identiques (2),
- par le fait que chaque logement en forme de fourche (4) présente un trou au voisinage de chaque extrémité de fourche,
- par le fait qu'une vis (23) maintenant l'articulation élastique y afférente (3) traverse ce trou, et
- par le fait que les surfaces intérieures mutuellement en regard des deux logements (4) des moitiés (2) sont séparées l'une de l'autre par une dimension (25) prédéterminée par l'articulation (3).

10. Entretoise de champ selon revendication 1 ou 4,
caractérisée

- par le fait que la partie centrale (1) possède la forme d'un Y asymétrique dont les bras (11, 12, 13) débouchent chacun dans un logement (4) pour une articulation élastique (3),
- par le fait qu'au moins deux des axes longitudinaux (lignes médianes 16, 17, 18) des leviers (14a, 14b, 14c) ont un point d'intersection commun (S1, S2, S3) situé à chaque fois entre une articulation élastique (3) et une pièce de retenue (15), et par le fait que le centre de système (Ms) du triangle déterminé par les points d'intersection (S1, S2, S3) est situé en dessous du centre géométrique (M) du faisceau de câbles-conducteurs et se trouve séparé de ce centre par une distance verticale (V) (figure 4).

11. Entretoise de champ selon revendication 10, caractérisée
par le fait que les lignes médianes ont un point d'intersection commun et par le fait que ce point d'intersection commun est situé à une distance verticale en dessous du centre géométrique du faisceau de câbles-conducteurs.

12. Entretoise de champ selon revendication 10 ou 11,
caractérisée
par le fait que, dans le cas d'un faisceau de trois conducteurs avec un intervalle horizontal des conducteurs (7) égal à 400 mm, ladite distance verticale (V) est de l'ordre de 50 à 80 mm.

13. Entretoise de champ selon l'une des revendications précédentes,
caractérisée
par le fait que la matière élastique (34) de l'articulation élastique (3) possède une dureté Shore d'environ 40.

14. Entretoise de champ selon l'une des revendications précédentes,
caractérisée
par le fait que l'enveloppe extérieure (32) de l'articulation élastique (3) possède un contour dont la forme est celle d'un parallélogramme à arêtes arrondies, ainsi qu'avec deux trous de retenue (37).

15. Entretoise de champ selon l'une des revendications précédentes,
caractérisée
par le fait que la pièce médiane (33) de l'articulation élastique (3) est traversée par un trou central (39) dont la forme (par exemple trou quadrangulaire 42) empêche la rotation d'une vis d'assemblage (43) qui y sera introduite, et par le fait que la surface extérieure (38) possède une configuration de corps de révolution.

16. Entretoise de champ selon revendication 15, caractérisée

par le fait que la surface extérieure (38) de la pièce médiane (33) est une enveloppe cylindrique.

17. Entretoise de champ selon revendication 15, caractérisée

par le fait que la surface extérieure (38) de la pièce médiane (33) est dotée d'une forme en cloche avec une partie paroi (46) cylindrique tournée vers l'extérieur en condition montée, et avec, s'y raccordant vers l'intérieur une partie paroi (47) qui est réalisée en tant qu'anneau à paroi sphérique avec un rayon notablement plus petit que dans le cas de la paroi intérieure (48).

18. Entretoise de champ selon l'une des revendications précédentes, caractérisée

par le fait qu'avant le montage, la face (30) de la pièce médiane (33) tournée vers le plan de symétrie (22) de l'articulation (3) présente, par rapport à la surface correspondante (29) de l'enveloppe extérieure (32), une saillie (50), et par le fait que cette saillie (50) est pratiquement réduite à zéro en condition montée.

19. Entretoise de champ selon revendication 18, caractérisée

par le fait qu'en condition non montée la saillie (50) vaut environ 1 à 4 mm.

20. Entretoise de champ selon l'une des revendications précédentes, caractérisée

par le fait que, dans la condition montée des deux moitiés d'articulation (31), la matière élastique (34) présente à chaque fois le contour extérieur d'une rondelle à bord sphérique.

21. Entretoise de champ selon l'une des revendications précédentes, caractérisée

- par le fait que le levier (14) relié à l'articulation (3) possède, en direction de l'articulation (3), la configuration d'une fourche (44) et, en direction du conducteur (7), la configuration d'une lancette (58) dotée de creusures en forme de rainure (53) dans lesquelles sont enclenchés des bourrelets d'extrémité (52) des moitiés (55) d'un serre-câble (54), et
- par le fait que les extrémités extérieures des moitiés de serre-câble (55) sont appuyées contre le conducteur (7) par une vis imperdable (57).

22. Entretoise de champ selon revendication 21, caractérisée

par le fait que la tête et l'écrou de la vis imperdable (57) sont logés dans des creusures (59) dans les moitiés de serre-câble (55).

23. Entretoise de champ selon revendication 21, caractérisée

par le fait que les moitiés de serre-câble (55) sont conçues-réalisées symétriquement par rapport au plan médian du serre-câble (54), ce plan contenant l'axe longitudinal du conducteur (7).

24. Entretoise de champ selon l'une des revendications 21 à 23, caractérisée

par le fait que, même dans la condition ouverte du serre-câble (54), les deux moitiés (55) sont maintenues de manière imperdable sur le levier (14) par un anneau élastique (56) inséré dans une gorge (56a) à proximité de l'extrémité intérieure du serre-câble (54).

25. Entretoise de champ selon l'une des revendications précédentes, caractérisée

par le fait qu'un égalisateur de potentiel (64) est conjugué aux moitiés d'articulation (31) en cas d'utilisation d'une matière élastique (34) électriquement non conductrice dans l'articulation (3).

26. Entretoise de champ selon l'une des revendications précédentes, caractérisée

par le fait que chaque moitié de serre-câble (55) est réalisée en tant que corps à sollicitation en flexion constante et est façonnée par forgeage à partir d'un alliage d'aluminium (figure 1a).

27. Entretoise de champ selon l'une des revendications précédentes, caractérisée

par le fait qu'une moitié d'une limitation par butée, réalisée en tant que nez est agencée sur chaque bras (6) de la partie centrale (1) ainsi que sur l'extrémité intérieure de chaque levier (14), et par le fait que l'intervalle entre les surfaces de butée des moitiés, en situation médiane du levier et du bras, a pour effet de limiter la déviation possible en cas de court-circuit.

Fig.1

Fig. 1a

Fig. 3

Fig. 2

Fig.4

Fig. 5

Fig. 6

Fig. 7

Fig. 8